# EUROPEAN PATENT APPLICATION

(11) **EP 4 560 199 A1**
(43) Date of publication of application: **28.05.2025**
(21) Application number: 24213188.6
(22) Date of filing: 15.11.2024
(51) Int. Cl.: F24C 7/08, H05B 6/64

(54) **METHOD AND APPARATUS FOR CONTROLLING COOKING PROCESS**

(30) Priority: 21.11.2023 US 202363601543 P
(71) Applicant: Maestro Food Co. (d/b/a Tovala), Chicago, Illinois 60607 (US)
(72) Inventor: GLENNON, Kevin James, Chicago, Illinois 60607 (US); BILLIONS, Joshua Lynn, Chicago, Illinois 60607 (US); FIFLIS, Peter Robert, Chicago, Illinois 60607 (US); WILCOX, Bryan Randall, Chicago, Illinois 60607 (US); BRAKHANE, Adam Christopher, Chicago, Illinois 60607 (US); BARNES, Benjamin Patrick, Urbana, Illinois 61801 (US); KABALA, Keeley, Saint Charles, Illinois 60175 (US)
(74) Representative: HGF

(57) **Abstract**

A method for preparing a food item for consumption includes obtaining a notification. The notification includes an indication of food sensitivity exposure posed by the food item (140). The method also includes providing the notification to a user and proceeding with one or more cooking operations to prepare the food item.

## Description

### BACKGROUND

Various appliances are available for heating or otherwise cooking food. An oven, for example, is an exemplary cooking device that is often used for cooking food at lower to moderate temperatures for fairly long periods of time. In some cases, a cooking process used by a cooking device can be determined based on reading a barcode or other indicia on a food item package. This so-called scan-to-cook or indicia-based process can free a user from having to configure the cooking device for a particular cooking process needed for a particular food item since the cooking device can itself determine and implement the cooking process in an automated way.

### SUMMARY

A first aspect of this disclosure provides a method for preparing a food item for consumption includes obtaining information corresponding with a machine-readable indicia associated with the food item, and displaying a notification to a user based, at least in part, on the information. The notification includes food sensitivity exposure associated with the food item. The method also includes determining whether a user provided an acknowledgement of having received the notification, and proceeding with one or more cooking operations based on determining that the user provided the acknowledgement.

The method may comprise reading the machine-readable indicia with a reader of the cooking device or appliance to obtain a code.

The method may comprise communicating the code to a remote server from the cooking device or appliance to obtain the information from the remote server.

Displaying the notification may include displaying the notification on a display of a cooking device or appliance.

The method may comprise obtaining the acknowledgement via a user interface of the cooking device or appliance.

The obtaining the information may be from a remote server based on the remote server obtaining a code associated with the machine-readable indica from a user device.

The displaying of the notification and/or obtaining of the acknowledgement may be performed via the user device.

The method may comprise the cooking device or appliance communicating with the user device to obtain the information.

The proceeding with one or more cooking operations may be based, at least in part, on the information.

The obtaining of the information may include obtaining parameters specifying a cooking process for the food item. The parameters may include a temperature and/or a duration.

The obtaining of the information may include the cooking device or appliance matching the machine-readable indicia to the information in memory.

The obtaining of the information from the database may include obtaining updated information based on an update of the memory.

The method may comprise communicating with a remote server, for example to obtain updates to the information. The method may comprise communicating with the remote server prior to the displaying the notification to the user.

Obtaining the updates to the information may include obtaining updated food sensitivity exposure associated with the food item.

Obtaining the updates to the information may include obtaining updated parameters to cook the food item.

The method may further comprise updating the notification, e.g. based on failing to establish communication with the remote server. Failing to establish communication with the remote server may indicate that the information associated with the food item has not been updated.

Another aspect provides a method for preparing a food item for consumption includes obtaining a notification. The notification includes an indication of food sensitivity exposure posed by the food item. The method also includes providing the notification to a user, and proceeding with one or more cooking operations to prepare the food item.

The method may comprise determining whether the user provided an acknowledgement of having received the notification. The method may comprise causing a cooking device to proceed automatically with the one or more cooking operations based on determining that the user provided the acknowledgement.

The method may comprise displaying the notification on a display of the cooking device. The method may comprise obtaining the acknowledgement via a user interface of the cooking device.

The method may comprise displaying the notification via a user device. Additionally or alternatively, the method may comprise obtaining the acknowledgement via the or a user device.

The method may comprise obtaining information corresponding with a machine-readable indicia associated with the food item. The information may include the notification. The proceeding with the one or more cooking operations may be based, at least in part, on the information. The information may include parameters indicating a temperature and/or a duration.

The method may comprise obtaining a code, e.g. by reading the machine-readable indicia. The method may comprise providing the code to a remote server, for example to obtain the information from the remote server.

A cooking device may perform the obtaining of the code by reading the machine-readable indicia and/or the providing of the code to obtain the information.

In some embodiments, a user device performs the obtaining the code by reading the machine-readable indicia and/or the providing the code to obtain the information and provides the information to the cooking device.

Obtaining the information may include a cooking device matching the machine-readable indicia to the information in memory. Obtaining the information may include obtaining updated information based on an update of the memory.

The method may comprise communicating with a remote serve, for example to obtain updates to the information. Obtaining the updates to the information may be done prior to the providing the notification to the user. Obtaining the updates to the information may include obtaining updated food sensitivity exposure associated with the food item or obtaining updated parameters to cook the food item.

In some embodiments, the method comprises updating the notification may be based on failing to establish communication with the remote server. Failing to establish communication with the remote server may indicate that the information associated with the food item has not been updated.

Obtaining the notification may include obtaining the indication of the food sensitivity exposure determined after preparation and shipment of the food item.

The method may comprise reading machine-readable indicia associated with the food item to obtain the notification.

The method may comprise a cooking device or appliance reading the indicia to obtain the notification.

The method may comprise a user device reading the indicia to obtain the notification.

The method may comprise the user device providing the notification to a cooking device or appliance.

The method may comprise a cooking device or appliance reading the indicia. The method may comprise providing a code obtained by reading the indicia to a remote server, e.g. to obtain the notification from the remote server.

The method may comprise obtaining the notification from a remote server, e.g. based on a user device reading indicia associated with the food item. The method may comprise providing a code obtained by reading the indicia to the remote server.

Obtaining the notification may include obtaining the indication of the food sensitivity exposure determined after preparation and shipment of the food item.

The method may include providing a food item having at least one food ingredient. The method may comprise providing a machine-readable indicia associated with the food item. The method may include reading the machine-readable indicia, e.g. to at least in part prepare a cooking appliance or device to heat the food item. The method may comprise displaying the notification to a user in response to reading the machine-readable indicia.

Another aspect provides a method for preparing a food item for consumption includes providing a food item having at least one food ingredient, and providing a machine-readable indicia associated with the food item. The method also includes reading the machine-readable indicia to at least in part prepare a cooking appliance or device to heat the food item, and displaying a notification to a user in response to reading the machine-readable indicia. The notification includes food sensitivity exposure information regarding the food item.

The method may comprise receiving a signal representing an acknowledgment by the user of having received the notification.

The method may comprise permitting the cooking appliance or device to operate to heat the food item based on the signal.

Displaying the notification may include displaying the notification on a user device.

Receiving the signal may include receiving the signal from the user device. Permitting the cooking appliance or device to operate may include sending a command to the cooking appliance or device that enables the cooking appliance or device to operate to heat the food item in response to receiving the signal.

Reading the machine-readable indicia may include machine reading a code on an insert provided with the food item.

Reading the machine-readable indicia may include machine reading a code on packaging of the food item.

Reading the machine-readable indicia may include machine reading a code on an insert provided with the food item and/or machine reading a code on packaging of the food item.

Reading the machine-readable indicia may include using a machine reader that is part of the cooking appliance or device.

Reading the machine-readable indicia may include using a machine reader of a user device.

Reading the machine-readable indicia may include determining parameters of a cooking process to be used by the cooking appliance or device, for example based on the machine-readable indicia.

Displaying the notification may include displaying the notification on a display of the cooking appliance or device.

The method may comprise sending information regarding the notification, for example from a remote server to the cooking appliance or device, or to a user device. Displaying the notification may include displaying the notification at the cooking appliance or device, or at the user device, for example based on the information regarding the notification from a remote server.

Displaying the notification may include displaying the notification at the cooking appliance or device, or at a user device, for example based on user allergy information.

Providing the food item may includes providing the food item to a user. The method may comprise discovering the food sensitivity exposure information, e.g. after providing the food item to the user.

Another aspect provides a cooking device or appliance, e.g. for carrying out one or more cooking operations to prepare the food item.

The cooking device or appliance may be configured to receive an acknowledgement from a user of having received the notification. The notification may include an indication of food sensitivity exposure posed by the food item.

The cooking device or appliance may be configured to proceed, e.g. automatically, with one or more cooking operations based on determining that the user provided the acknowledgement.

The cooking device or appliance may comprise a reader, e.g. for reading a machine-readable indicia associated with the food item.

The cooking device or appliance may comprise a display, e.g. for displaying a notification to a user.

The cooking device or appliance may comprise an input device or user interface.

Another aspect provides a system for preparing a food item for consumption. The system may comprise a food preparation system. The system may comprise the cooking device or appliance described above. The system may comprise any one or more features described above in relation to any one of the methods.

The system may comprise a reader, e.g. for reading a machine-readable indicia associated with the food item.

The system may comprise a display, e.g. for displaying a notification to a user.

The system may comprise a cooking device or appliance, e.g. for carrying out one or more cooking operations to prepare the food item. The cooking device or appliance may comprise the cooking device or appliance described above.

The cooking device or appliance or the system may be configured to read, e.g. using the reader, a machine-readable indicia associated with the food item.

The cooking device or appliance or the system may be configured to display a notification to a user, which may relate to the machine-readable indicia read by the reader. The notification may include an indication of food sensitivity exposure posed by the food item.

The system may be configured to cause the cooking device or appliance to carry out, or proceed with, one or more cooking operations to prepare the food item, e.g. on receipt of a signal representing an acknowledgment by the user of having received the notification.

The system may comprise an input device or user interface, e.g. for receiving an input or acknowledgement from a user.

The system may be configured to determine whether a user provided an acknowledgement of having received the notification. The system may be configured to cause the cooking device to carry out or proceed with the one or more cooking operations based on determining that the user provided the acknowledgement.

The system may comprise a user device. The user device may comprise a handheld or desktop computing device, such as a tablet, computer, or smartphone.

The cooking device or appliance or the system may be configured to receive or determine the acknowledgement via the input device or user interface. Alternatively, the system may be configured to determine the acknowledgement via the user device.

The user device may comprise the reader. Alternatively, the cooking device or appliance may comprise the reader.

The user device may comprise the display. Alternatively, the cooking device or appliance may comprise the display.

The system may comprise a remote server. The remote server may be operable to communicate with the cooking device or appliance and/or with the user device.

For the avoidance of doubt, any of the features described herein apply equally to any aspect of the invention. For example, the system or cooking device or appliance may comprise any one or more features of the method relevant thereto and/or the method may comprise any one or more features or steps relevant to one or more features of the system or cooking device or appliance. Indeed, any method feature mentioned above may be included individually or in any combination with the method of any aspect described above.

A further aspect provides a computer program element comprising computer readable program code means for causing a processor to execute a procedure to implement one or more steps of the aforementioned method.

A further aspect provides the computer program element embodied on a computer readable medium.

A further aspect provides a computer readable medium having a program stored thereon, where the program is arranged to make a computer execute a procedure to implement one or more steps of the aforementioned method.

A further aspect provides a control means or control system or controller comprising the aforementioned computer program element or computer readable medium. The computer readable medium may comprise a memory. The control means or control system or controller may comprise a process, which may be operable to execute a procedure to implement one or more steps of the aforementioned method.

A variety of additional aspects will be set forth in the description that follows. The aspects can relate to individual features and to combination of features. It is to be understood that both the foregoing general description and the following detailed description are exemplary and explanatory only and are not restrictive of the broad inventive concepts upon which the embodiments disclosed herein are based. To the extent various aspects are not mutually exclusive, such aspects can be combined together or employed separately in any suitable way in any suitable embodiment.

### BRIEF DESCRIPTION OF THE DRAWINGS

FIG. 1 is block diagram of a food preparation system according to one embodiment;
FIG. 2 is a block diagram of a cooking device according to one embodiment;
FIG. 3 is a process flow of a method of cooking a food item according to one embodiment;
FIG. 4 is a process flow of a method of cooking a food item according to one embodiment involving communication with a remote server;
FIG. 5 is a process flow of a method of cooking a food item according to one embodiment involving using a database of information; and
FIG. 6 is a process flow of a method of cooking a food item according to one embodiment involving obtaining an update of information from a remote server.

### DETAILED DESCRIPTION

Various embodiments will be described in detail with reference to the drawings, wherein like reference numerals represent like parts and assemblies. Reference to various embodiments does not limit the scope of the claims. Additionally, any examples set forth in this specification are not intended to be limiting and merely set forth some of the many possible embodiments for the claims.

As noted, reading indicia associated with a food item can facilitate food preparation without a user controlling or even knowing the parameters (e.g., temperature, duration, cooking method (e.g., bake, broil)) needed for a cooking device, such as an oven. The indicia-based cooking process may use communication with a remote server that provides the cooking parameters in response to being provided the indicia associated with the food item. In some embodiments, cooking parameters can be included in the indicia itself, such as being encoded in a barcode, QR code, RFID tag, etc., and/or can be retrieved from memory of the cooking device or other local or remote device based on the indicia.

The inventors have recognized benefits stemming from a user notification of food sensitivity exposure based on a food item selected for indicia-based preparation. Food sensitivity exposure may refer to direct exposure in the form of an ingredient of the food item or indirect exposure in the form of processing of one or more ingredients of the food item in a facility that handles a potentially sensitive ingredient. Food sensitivity may refer to a mild to severe allergy to a particular ingredient, for example. Thus, peanuts, tree nuts, dairy, eggs, and other known allergens in a food item or processed in a facility with one or more ingredients of a food item may represent a food sensitivity exposure. Additionally or alternately, food sensitivity may refer to a cultural or religious sensitivity rather than or in addition to a medical one. For example, all meat may pose a food sensitivity exposure based on a user potentially being vegetarian, whether by choice or based on a medical condition.

The food sensitivity exposure associated with a given food item may be obtained in a number of ways including, for example, through communication with a remote server. According to some embodiments, food sensitivity exposure presented by the food item may be indicated along with cooking parameters. The inventors have also recognized that information obtained by reading the indicia may be corrected or augmented according to some embodiments. According to some embodiments, the information stored in the remote server, cooking device, or other device in correspondence with the indicia may be updated. In some embodiments, the updated information may be provided, based on reading the indicia, to the food preparation appliance or user device associated with the indicia. According to some embodiments, updated information or an updated code to be associated with indicia may be provided to multiple food preparation appliances and/or user devices in a periodic or event-based scheme.

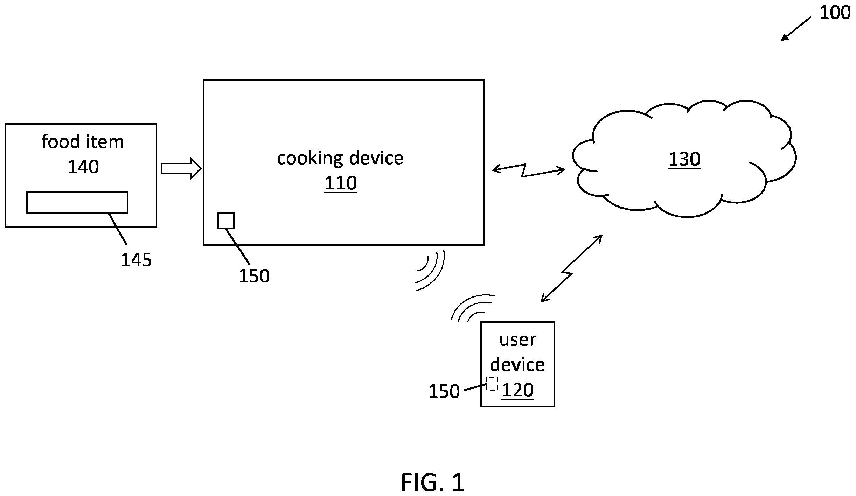

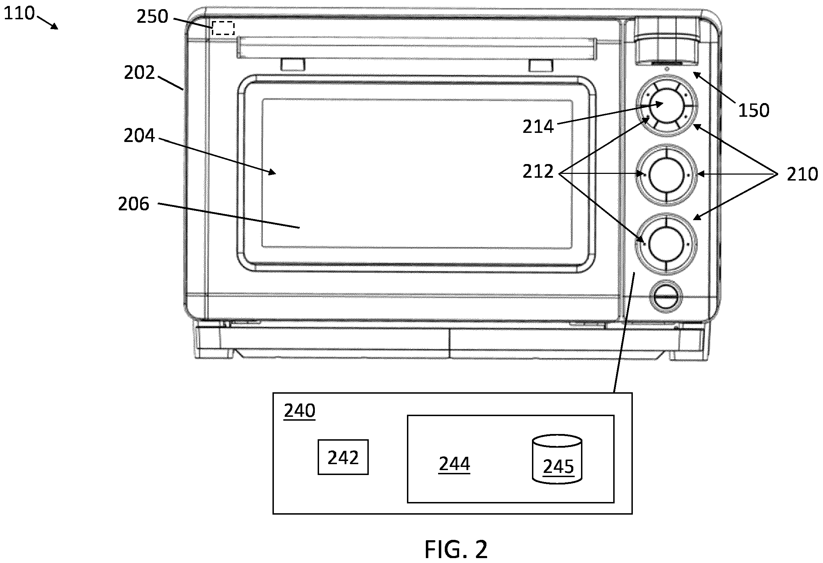

FIG. 1 is a block diagram of a food preparation system 100 according to one embodiment. The food preparation system 100 may include a cooking device 110, user device 120, a remote server 130 (e.g., cloud-based server), and a food item 140 that is packaged with indicia 145. The cooking device 110 may be an oven that is further detailed with reference to FIG. 2 or any other suitable device for heating or otherwise preparing a food item for consumption. The user device 120 may be any handheld or desktop computing device with non-limiting examples including a tablet, computer, or smartphone. The user device 120 may communicate with the cooking device 110 directly and/or indirectly via radio frequency (RF), using the Bluetooth standard, for example, or any other suitable communications arrangements. Communication between and among the cooking device 110, user device 120, and remote server 130 is not intended to be limited and may employ any known wired or wireless communication. That is, both the cooking device 110 and the user device 120 may communicate with the remote server 130 and each other via any known communication system (e.g., cellular, Wi-Fi). Multiple user devices 120 may be configured to communicate with the cooking device 110, and the number and types of user devices 120 are not intended to be limited by the illustration in FIG. 1.

An exemplary food item 140 is shown in FIG. 1. The food item 140 is shown to be associated with indicia 145. The indicia 145 may be any known machine-readable tag or identifier. Non-limiting examples of indicia 145 include a one- or two-dimensional barcode, quick response (QR) code, RF identifier (RFID) tag or label, or a uniform resource locator (URL). The location of the indicia 145 and the number of indicia 145 or copies of indicia 145 associated with a food item 140 are not limited. For example, one copy of the indicia 145 may be located on an outer packaging of the food item 140 (e.g., on an inside cover of the packaging, on an innermost cover) while the same or other indicia associated with a food item may be located on an insert or other component included with the food item 140. The insert may be a printed card or pamphlet and may include the same information printed on packaging of the food item and/or may include additional information. For example, a range of cook times associated with different models of cooking devices 110 may be printed on an insert, along with food sensitivity information, an ingredient list, food preparation instructions, a description of the food item, a list of related food items used to form a complete meal, and so on.

As another example, information may be distributed among multiple indicia 145. This may be the case for a food item 140 that includes parts (e.g., entree and bread) that need to be cooked separately, for example. That is, one portion of the food item (e.g., entrée) may require different cooking parameters than another portion (e.g., bread). By using indicia that is specific to each portion, food sensitivity information may also be provided with higher resolution. For example, the indicia associated with an entrée may not indicate gluten exposure while the indicia 145 associate with the bread does indicate gluten exposure.

A given food item 140 (or portion) may have more than one indicia 145 associated with it to facilitate selection of a personal cooking preference. For example, a food item 140 may have one indicia 145 associated with a less (or more) crispy result or less (or more) browning or doneness than a second indicia 145. A user may select which indicia 145 to present (to a user device 120 or cooking device 110) for reading and preparation based on their cooking reference. The multiple indicia 145 associated with different cooking preferences may be provided on packaging of the food item 140 and/or on an insert provided with the food item 140, for example.

A user may have selected indicia 145 associated with a desired cooking preference read by the cooking device 110 and/or user device 120, and thereby cause the cooking device 110 to prepare the food item in accordance with the selected indicia 145. In some cases, user preferences such as crispiness, browning, doneness, etc. may be pre-defined and used by the food preparation system 100 to adjust a cooking process so that the food item 140 is prepared according to the user preferences. For example, such preferences may be stored at the remote server 130 and provided to the cooking device 110 for use in preparing a food item 140. Such preference information may be provided to the cooking device 110 in response to the indicia 145 being read, e.g., by the cooking device 110 and/or user device 120 (e.g., along with notification and/or cooking parameter information).

As shown in FIG. 1, both the cooking device 110 and the user device 120 may include a reader 150 to read the indicia 145 associated with the food item 140. Alternately, only one of the devices may include a reader 150. The reader 150 may include a camera and processor that obtain and process an image of a QR code that is the indicia 145, for example. Thus, although shown as a separate component for explanatory purposes, the reader 150 may include an existing camera and processor of the user device 120, for example. The reader 150 may be a transceiver that transmits an RF query and obtains one or more RF signals in response from RFID indicia 145, as another example. The reader 150 may be any known reader for a known machine-readable tag or any other suitable indicia.

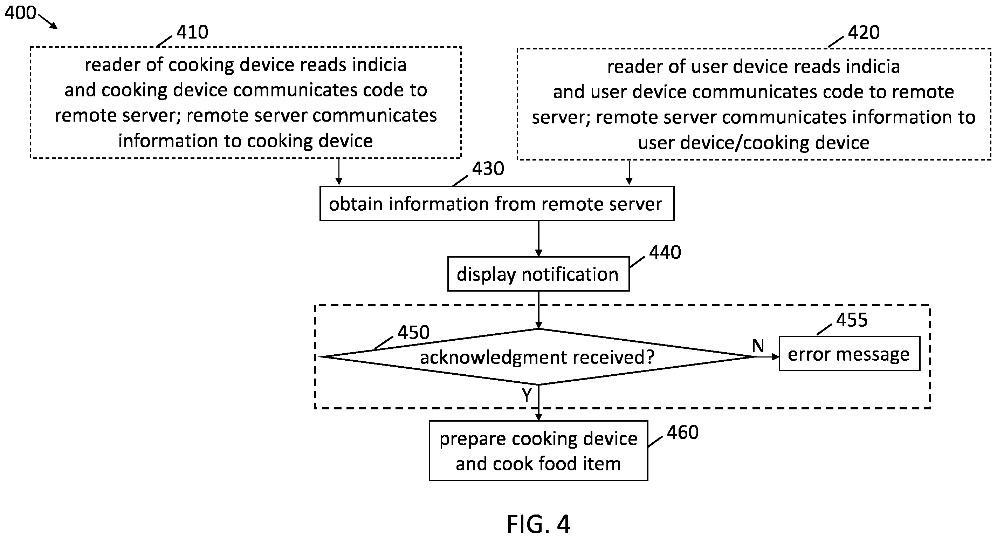

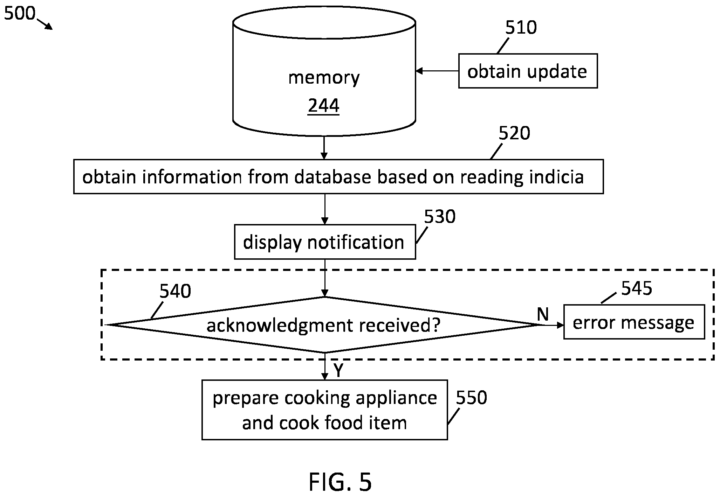

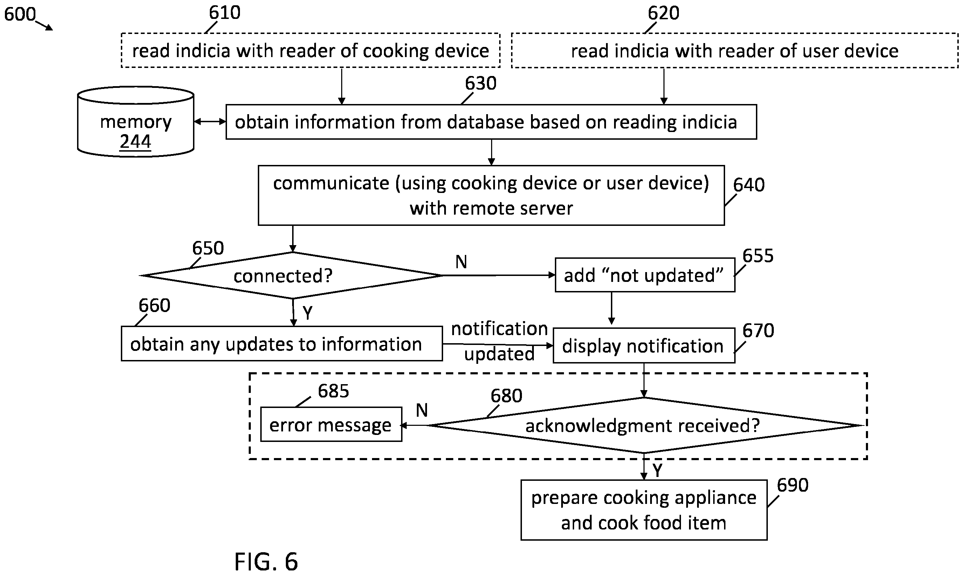

According to some embodiments, reading the machine-readable indicia 145 with a reader 150 may provide a code or identifier that may be provided to the remote server 130 in order to obtain information (e.g., cooking parameters, notifications), as discussed with reference to FIG. 4 for example. In some embodiments, for example, the indicia 145 may represent a mathematical operation that provides a value, a type of a code or other information, that the remote server 130 associates with certain information. Indicia 145, code, and identifier may be used interchangeably as an output obtained by reading the indicia 145. According to some embodiments, the indicia 145 may provide certain information itself. That is, the reader 150 may obtain particular information such as cooking instructions, notifications, etc., by reading a QR code, for example. Alternately, in some embodiments, the indicia 145 (or other output, such as a code) may be associated with information stored in memory in the cooking device 110, for example. This is further discussed with reference to FIG. 5. According to some embodiments, a combination of the machine-readable indicia 145 and communication with the remote server 130 may be used to obtain updated information. This is further discussed with reference to FIG. 6.

FIG. 2 is a block diagram detailing aspects of the cooking device 110 according to one embodiment. The exemplary cooking device 110 includes a housing 202 with a cavity 204 in which the food item 140 is placed for cooking. The housing 202 forms an enclosure in combination with a door 206 according to the illustration in FIG. 2. A reader 150 may be used to read the machine-readable indicia 145 associated with the food item 140. Input/output (I/O) devices 210 that facilitate user interaction with the cooking device 110 may include buttons 212 for input of selections or controls and one or more output devices 214 such as a display for visual notifications, one or more speakers for aural notifications, and other (e.g., haptic) notifications. Heating elements and/or a magnetron may be included (e.g., in the cavity 204) for cooking or heating.

A controller 240 may include processing circuitry including one or more processors 242 and memory 244 that stores instructions for processing by one or more of the processors 242 and may include information like cooking parameters and notifications in association with a code or other identifier indicated by the indicia 145. Any one or more of the processors 242 may perform any of the processes discussed with reference to the cooking device 110. The one or more processors 242, in conjunction with instructions stored by the memory 244, may also implement manual and/or automated cooking operations and other known functionality that is not detailed herein. The cooking device 110 may include a network interface 250 or, more generally, a communication component that facilitates communication with the remote server 130, as well as with one or more user devices 120. The exemplary illustration in FIG. 2 is not intended to limit the types or locations of I/O devices 210 or other components of the cooking device 110.

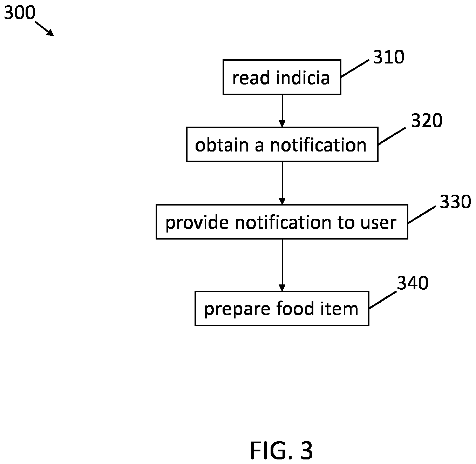

FIG. 3 is a process flow of a method 300 of cooking a food item 140 according to some embodiments. FIGs. 4-6 illustrate additional exemplary process flows for explanatory purposes and discussion of additional features. The exemplary features discussed with reference to FIGs. 4-6 may be implemented, alone or in combination, in any of the embodiments discussed herein.

At 310, reading indicia 145 may include reading a QR code, RFID tag or label, barcode, or other machine-readable label. The reading may be performed by a reader 150 of the cooking device 110 or a user device 120. For example, the user may position indicia 145 provided on an insert of the food item 140 to a user device 120 (e.g., cellular device) for reading. As another example, the user may use the reader 150 of the cooking device 110 to read indicia 145 provided on the packaging of a food item 140. As noted, a food item 140 may include more than one indicia 145 associated with respective portions. The user may use a reader 150 to read the indicia 145 associated with the portion being placed in the cavity 204 of the cooking device 110 for preparation. The user may select one indicia 145 among two or more indicia 145 associated with the same food item 140 based on corresponding desired cooking results (e.g., crispiness, doneness, browning) for the food item 140. In some cases, the indicia 145 may identify the food item (e.g., as including a particular set of food ingredients) and/or may provide a unique identifier for the food item (e.g., which may be unique in relation to other food items including the same or similar set of food ingredients). The indicia 145 may be used to obtain or otherwise define cooking parameters to be used by a cooking device 110, so the indicia 145 may be read as a first or otherwise early step in preparing the food item 140 for consumption.

At 320, obtaining a notification can include obtaining information about food sensitivity exposure associated with a food item 140 to be presented to a user. According to some embodiments and as discussed in the examples of FIGs. 4-6, information obtained at 320 may include not only the notification but also cooking parameters corresponding to preparation of the food item 140 and/or other information associated with the indicia 145. The notification, with or without additional information, may be obtained directly by reading the indicia 145 (at 310). That is, the indicia 145 may have, encoded therein, the food sensitivity information to be provided as a notification to the user. As another example, the notification may be obtained by associating the output of reading the indicia 145 (at 310) with the notification, which is stored in association with the output in memory 244 of the cooking device 110, user device 120, or remote server 130. In some cases, the associated notification in memory 244 may be updated based on a correction or additional exposure information discovered after the indicia 145 is generated and/or included with packaging and/or an insert of a food item 140. The update may be provided to one or more cooking devices 130 based on a periodic or event-based updating scheme, for example, or in response to a cooking device 110 or user device 120 reading the indicia 145.

As yet another example, the notification may be obtained by providing the output (e.g., code, identifier, value) of reading the indicia 145 (at 310) to the remote server 130. The output may be provided to the remote server 130 by the cooking device 110 or the user device 120 via wired or wireless communication. Based on receiving the output resulting from reading the indicia 145, the remote server 130 may provide the notification to the cooking device 110, regardless of which device sent the output. Alternately, the remote server 130 may provide the notification to the user device 120 based on obtaining the output of reading the indicia 145 from the user device 120. In this case, the user device 120 may provide the notification to the user or may forward the notification to the cooking device 110. The notification from the remote server 130 may be an updated notification that is corrected or augmented following the generation of the indicia 145 and/or inclusion of the indicia 145 with packaging and/or an insert of a food item 140.

At 330, a notification may be provided to a user, e.g., to indicate a food sensitivity exposure to the user. In some cases, providing the notification to the user may be via one or more output devices 214 of the cooking device 110. For example, the food sensitivity exposure may be displayed as text. As another example, an audio output may be provided alternately or additionally. The user device 120 may additionally or alternately provide the notification to the user. As discussed with reference to FIGs. 4-6, an optional feature may involve obtaining acknowledgement of the notification from the user. The acknowledgement may be a condition of proceeding with preparing the food item 140 (at 340) according to some embodiments.

At 340, preparing the food item 140 may involve one or more cooking operations (e.g., baking, broiling) and may also involve parameters specifying the cooking operations (e.g., temperature, cooking operation, cooking duration) that are obtained along with the notification and/or after acknowledgement of a notification. That is, as discussed in the exemplary embodiments with reference to FIGs. 4-6, the parameters may be part of the information that is obtained directly from the indicia 145 or from local memory 244 or from the remote server 130 directly or via a user device 120, for example.

FIG. 4 is a process flow of a method 400 of cooking a food item 140 according to one embodiment. Information indicating cooking parameters (e.g., cooking method, temperature, duration) and food sensitivity exposure (e.g., gluten, dairy, peanuts) associated with the food item 140 may be obtained in at least one of two ways. At 410, a reader 150 of the cooking device 110 may be used to read the indicia 145 associated with the food item 145. As previously noted, the indicia 145 may be on packaging of the food item 140 and/or on an insert included in the packaging, for example. The network interface 250 of the cooking device 110 may then communicate a code (e.g., unique identifier) indicated by the indicia 145 to a remote server 130 and obtain the information from the remote server 130. The remote server 130 may additionally or alternately send the information to a user device 120.

According to another way, at 420, a reader 150 of a user device 120 may be used to read the indicia 145. The user device 120 may then communicate a code (e.g., unique identifier) indicated by the indicia 145 to a remote server 130 and obtain the information from the remote server 130. In some cases, the user device 120 may communicate the information to the cooking device 110 (e.g., via a Bluetooth connection), or the cooking device 110 may receive information from the server 130 in response to the user device 120 sending the indicia information to the server 130.

Via either the processes of 410 or 420, at 430, the cooking device 110 obtains the information from the remote server 130 according to the exemplary embodiment. The information from the remote server 130 may be the information available at the time of the communication between the cooking device 110 or the user device 120 and the remote server 130. Thus, the information may have been updated from initially stored information. For example, at the time of development, packaging, or shipping of the food item 140, the indicia 145 may have been associated with particular information (e.g., a particular temperature and duration for baking and/or an indication that the food item includes dairy). This information may reflect what was known at the time of the development, packaging, or shipment of the food item 140. Subsequently, it may have been discovered that the food item includes an ingredient that was processed in a facility that also processes peanuts, for example, or that the food item no longer includes a dairy product. This additional food sensitivity exposure may be used to update the information at the remote server 130. Thus, the additional food sensitivity exposure may be added to the information provided by the remote server 130 after a user initiates reading of the indicia 145 of the food item 140 and the cooking device 110 or user device 120 communicates the indicia 145 to the remote server 130 (i.e., during real-time communication as part of the cooking process).

At 440, displaying a notification of the food sensitivity exposure of the food item 110 for acknowledgement by the user may be performed by using a display or other output (e.g., aural) of the user device 120 or one or more output devices 214 of the cooking device 110. According to optional embodiments included in FIGs. 4-6, the notification to the user may give rise to a required acknowledgement by the user that they received the notification. The user may provide acknowledgment via the user device 120 or by using the buttons 212 or other user interface of the cooking device 110. If the user device 120 is used to provide acknowledgement to the remote server 130, the remote server 130 may then signal the cooking device 110 to proceed with cooking the food item 140.

In the exemplary method 400 of FIG. 4, at 450, a check is performed either at the remote server 130 or at the cooking device 110 itself to determine if an acknowledgment was received (e.g., via the cooking device 110 or via the user device 120). A predefined duration may be provided for receipt of the acknowledgement, for example. If the check at 350 indicates that an acknowledgement was not received (e.g., within a predefined duration after obtaining the information from the remote server 130 (at 430) or after display of the notification (at 440)), an error message may be displayed at 455. This message may indicate that the method 400 must be restarted by reading the indicia 145. If the check at 450 indicates that an acknowledgement of the food sensitivity exposure notification was received, then the processes at 460 may be implemented by the controller 240 of the cooking device 110 to prepare the cooking device 110 (e.g., to set a specified temperature, to initiate a specified cooking method) and to cook the food item 140. When the check is performed by the remote server 130 rather than by the cooking device 110, the cooking device 110 may proceed to the cooking process (at 460) based on a signal from the remote server 130.

FIG. 5 is a process flow of a method 500 of cooking a food item 140 according to some embodiments. According to some embodiments, the memory 244 at the cooking device 110 and/or at a user device 120 may store information in association with a code or other identifier obtained by reading the indicia 145 associated with a food item 140. As noted with reference to FIG. 4, the information may include cooking parameters (e.g., cooking method, temperature, duration) and food sensitivity exposure (e.g., gluten, dairy, peanuts) associated with the food item 140. At 510, obtaining an update to the memory 244 may be periodic or may be based on additional information being available (e.g., improved cooking parameters being developed, additional food sensitivity exposure being discovered) for one or more food items 140. Such an update may be provided by the remote server 130 or other device.

At 520, information may be obtained from memory 244 based on reading indicia 145 associated with a food item 140. For example, the processes can include obtaining information from memory 244based on the reader 150 of the cooking device 110 reading indicia 145 of a given food item 140. Based on the update to the memory 244 (at 410), the information may include cooking parameters or food sensitivity exposure notifications that were not available when the food item 140 was initially developed, packaged, or shipped. The processes at 530, 540, 545, and 550 are similar to those at 440, 450, 455, and 460, discussed with reference to FIG. 4. Specifically, at 530, a notification is displayed to the user regarding food sensitivity exposure associated with the food item 140 and an acknowledgement may be requested. At 540, a check is done (e.g., up to a predefined duration following display of the notification (at 530)) of whether the acknowledgement was received. If it was not, an error message may be displayed at 545. If the acknowledgement was received, preparing the cooking device 110 and cooking the food item 140 is performed at 550 based on the cooking device 110 itself receiving and processing the acknowledgement or on the remote server 130 providing a control signal to the cooking device 110 based on receiving the acknowledgement (e.g., via the cooking device 110 or a user device 120).

FIG. 6 is a process flow of a method 600 of cooking a food item 140 according to one embodiment. The reader 150 of the cooking device 110 may be used to read indicia 145 associated with a food item 140, at 610, or the reader 150 of a user device 120 may be used instead, at 620. If a user device 120 is used (at 620), the user device 120 may communicate the code or other unique identifier obtained by reading the indicia 145 to the cooking device 110. At 630, obtaining information from memory 244 based on reading the indicia 145 (at 610 or 620) refers to obtaining the information that is stored in the memory 244 in correspondence with the indicia 145 (or code or identifier obtained from the indicia 145). Alternately, the indicia 145 may provide the information encoded therein.

At 640, communicating with the remote server 130 may be performed by the cooking device 110 or the user device 120. For example, the user device 120 may provide the identifier obtained from reading the indicia 145 to the cooking device 110 or initiate communication with the remote server 130. Alternately, the cooking device 110 may initiate communication with the remote server 130 based on reading the indicia 145 or obtaining the identifier from the user device 120. At 650, a check may be done by whichever device (user device 120 or cooking device 110) initiated the communication with the remote server 130 to determine whether a connection was successful. The check may be performed after a predefined duration, for example. If the connection was successful, updates may be obtained from the remote server 130 at 660. The updates may include cooking parameters or food sensitivity exposure notifications that were not available when the food item 140 was initially developed, packaged, or shipped.

If the updates are obtained by the user device 120, they may then be communicated to the cooking device 110. Alternately, the remote server 130 may communicate updates directly to the cooking device 110 even if the indicia 145 is provided by the user device 120. If the cooking device 110 obtains an identifier associated with a food item 140 from a user device 120 and is not instructed to communicate with the remote server 130, it may pause for a predetermined period to allow the user device 120 to communicate with the remote server 130. At 670, the notification (with any updates obtained at 660) is displayed.

If the check at 650 indicates that the connection with the remote server 130 was not successful, then an additional notification may be added indicating that an update could not be obtained, at 655. If the user device 120 is used to communicate with the remote server 130, the user device 120 may inform the cooking device 110 that a connection could not be established. In this case, at 670, any notification obtained from memory 244 (at 630) may be displayed along with the indication that any update to the notification could not be obtained.

Then, the processes at 680, 685, and 690 are similar to those at 450, 455, 460 and at 540, 545, 550. Specifically, at 680, a check is done (e.g., up to a predefined duration following display of the notification (at 670)) of whether the acknowledgement was received. If it was not, an error message is displayed at 685. If the acknowledgement was received, preparing the cooking device 110 and cooking the food item 140 is performed at 690.

The various embodiments described above are provided by way of illustration only and should not be construed to limit the claims attached hereto. Those skilled in the art will readily recognize various modifications and changes that may be made without following the example embodiments and applications illustrated and described herein, and without departing from the true spirit and scope of the following claims.

## Claims

1. A method for preparing a food item for consumption, the method comprising:
obtaining a notification, wherein the notification includes an indication of food sensitivity exposure posed by the food item;
providing the notification to a user; and
proceeding with one or more cooking operations to prepare the food item.

2. The method according to claim 1, further comprising:
determining whether the user provided an acknowledgement of having received the notification; and
causing a cooking device to proceed automatically with the one or more cooking operations based on determining that the user provided the acknowledgement.

3. The method according to claim 2, further comprising displaying the notification on a display of the cooking device and obtaining the acknowledgement via a user interface of the cooking device, or displaying the notification and obtaining the acknowledgement via a user device.

4. The method according to any preceding claim, further comprising:
obtaining information corresponding with a machine-readable indicia associated with the food item, wherein the information includes the notification and the proceeding with the one or more cooking operations is based, at least in part, on the information including parameters indicating a temperature and a duration.

5. The method according to claim 4, further comprising:
obtaining a code by reading the machine-readable indicia; and
providing the code to a remote server to obtain the information from the remote server, wherein
a cooking device performs the obtaining the code by reading the machine-readable indicia and the providing the code to obtain the information, or
a user device performs the obtaining the code by reading the machine-readable indicia and the providing the code to obtain the information and provides the information to the cooking device.

6. The method according to claim 4 or claim 5, wherein the obtaining the information includes a cooking device matching the machine-readable indicia to the information in memory, and the obtaining the information includes obtaining updated information based on an update of the memory.

7. The method according to any one of claims 4 to 6, further comprising communicating with a remote serve to obtain updates to the information prior to the providing the notification to the user, wherein obtaining the updates to the information includes obtaining updated food sensitivity exposure associated with the food item or obtaining updated parameters to cook the food item, or
updating the notification, based on failing to establish communication with the remote server, indicating that the information associated with the food item has not been updated.

8. The method according to any preceding claim, wherein obtaining the notification includes obtaining the indication of the food sensitivity exposure determined after preparation and shipment of the food item.

9. The method according to any preceding claim, the method comprising:
providing a food item having at least one food ingredient;
providing a machine-readable indicia associated with the food item;
reading the machine-readable indicia to at least in part prepare a cooking device to heat the food item; and
displaying the notification to a user in response to reading the machine-readable indicia.

10. The method according to claim 9, further comprising:
receiving a signal representing an acknowledgment by the user of having received the notification; and
permitting the cooking device to operate to heat the food item based on the signal, wherein
the displaying the notification includes displaying the notification at the cooking device or on a user device,
the receiving the signal includes receiving the signal at the cooking device or from the user device, and
the permitting the cooking device to operate includes sending a command to the cooking device that enables the cooking device to operate to heat the food item in response to receiving the signal.

11. The method according to claim 9 or claim 10, wherein
the reading the machine-readable indicia includes:
machine reading a code on an insert provided with the food item;
machine reading a code on packaging of the food item; or
machine reading a code on an insert provided with the food item and machine reading a code on packaging of the food item; and
the reading the machine-readable indicia also includes:
using a machine reader that is part of the cooking device, or
using a machine reader of a user device.

12. The method according to any one of claims 9 to 11, wherein
reading the machine-readable indicia includes determining parameters of a cooking process to be used by the cooking device based on the machine-readable indicia; and/or
displaying the notification includes displaying the notification on a display of the cooking device or a user device, or displaying the notification at the cooking device or the user device based on user allergy information.

13. The method according to any one of claims 9 to 12, further comprising obtaining information regarding the notification from a remote server to the cooking device or a user device, and displaying the notification includes displaying the notification at the cooking device or the user device based on the information regarding the notification from a remote server.

14. The method according to any one of claims 9 to 13, wherein the providing the food item includes providing the food item to the user, the method further comprising discovering the food sensitivity exposure information after the providing the food item to the user.

15. A cooking device for preparing a food item for consumption, the cooking device being configured to:
receive an acknowledgement from a user of having received the notification that includes an indication of food sensitivity exposure posed by the food item; and
proceed automatically with one or more cooking operations based on determining that the user provided the acknowledgement.
